# EUROPEAN PATENT SPECIFICATION

(11) **EP 2 064 056 B1**
(45) Date of publication and mention of the grant of the patent: **07.07.2010**
(21) Application number: 07788163.9
(22) Date of filing: 02.08.2007
(51) Int. Cl.: B32B 27/30, B32B 27/36

(54) **FILMS AND PACKAGES FOR RESPIRING FOOD PRODUCTS**
FOLIEN UND VERPACKUNGEN FÜR ATMENDE LEBENSMITTEL
FILMS ET EMBALLAGES POUR DES PRODUITS ALIMENTAIRES AYANT BESOIN DE RESPIRER

(30) Priority: 05.09.2006 EP 06120155
(43) Date of publication of application: 03.06.2009
(73) Proprietor: Cryovac, Inc., Duncan, SC 29334 (US)
(72) Inventor: PALEARI, Mario, I-20010 Pogliano Milanese (MI) (IT); URSINO, Felice, I-20017 Rho (IT)
(74) Representative: Fraire, Cristina
(86) International application number: PCT/EP2007/057998
(87) International publication number: WO 2008/028729

(56) References cited:
- EP-A- 1 698 459
- IT-B- 1 168 173
- US-A- 3 274 143
- US-A- 3 762 979
- US-A- 4 826 934

## Description

### Technical Field

The present invention relates to the packaging of respiring food products, that is products which need to exchange gas with the environment after being packaged. In particular the present invention relates to a film which comprises a blend of vinylidene chloride copolymers and lactone polyesters as a barrier layer and which is characterised by a suitable oxygen permeability to provide for the correct preservation of respiring food products. The invention also relates to a package comprising the film and a respiring food product enclosed therein.

### Background Art

The term "respiring food product" is used herein to indicate food products which require for their optimal preservation packaging materials with specific gas permeabilities, in particular packaging materials having an oxygen permeability, expressed in terms of oxygen transmission rate, in the range of from about 100 to about 500 cm³ /m²-day-bar at 23°C.

Some respiring food products release carbon dioxide after being packaged, like most sorts of cheese and some processed meats. In particular the packaging of these products requires a compromise between permeability both to oxygen and to carbon dioxide. In the case of cheese it is firstly necessary to have a low oxygen permeability in order to prevent contact of the air with cheese which leads to the growth of mould on the cheese and the oxidation of fat with the consequent formation of a rancid taste. However, in the case of many cheeses, a partial fermentation takes place after the cheese is packaged and in such cases, it is necessary for the film to be permeable, to at least a degree, to carbon dioxide in order to prevent a build up of carbon dioxide in the package. Similar considerations apply in relation to some processed meats which exchange carbon dioxide and/or oxygen after being packaged.

Values of the oxygen transmission rate of films suitable for the preservation of respiring food products typically range from about 100 to about 500 cm ³ /m²-day-bar at 23°C.

Carbon dioxide transmission rate preferably ranges from about 300 to about 3,500 cm³ /m²-day-bar at 23°C.

Films which are currently used to package cheese often comprise a barrier layer of vinylidene chloride copolymers. Additives such as plasticisers and/or stabilisers are generally added to the vinylidene chloride polymer barrier layer in order to improve its thermal resistance and to modify its physical properties, including permeability. As an example IT-A-1168173 discloses a film comprising a vinylidene chloride copolymer barrier layer in which a polyester plasticiser may be used to control the permeability of the film. The polyester plasticizer may be either a low molecular weight monomeric compound obtained by the reaction of a bifunctional organic acid and an alcohol or a higher molecular weight polymeric compound obtained by the reaction of a bifunctional organic acid and a glycol.

A common plasticizer used in the modification of the gas barrier properties of vinylidene chloride blends and used in commercially available films is for instance epoxidised soyabean oil.

### Disclosure of Invention

It has now been found that films suitable for the packaging of respiring food products like cheese can be produced using a vinylidene chloride copolymer blend containing a lactone polyester additive, in particular poly[oxy(1-oxo-1,6-hexanediyl)] (polycaprolactone). The films thus obtained have been found to have a reduced dependance of the gas permeability, in particular the oxygen permeability, from the time lapsed since the manufacture of the film. That is, ageing has a limited effect on the gas permeability of the films.

The use of lactone polyesters and in particular polycaprolactones as plasticizers for vinyl resins, such as PVC, is known in the prior art. For instance US 3,274,143 describes the use of liquid lactone polyesters, with an average molecular weight from about 300 to about 9,000, for the preparation of plasticized vinyl resins. US 4,889,892 describes flexible compositions comprising copolymers of vinyl chloride and alkyl acrylates and polycaprolactone. Compositions comprising 2 to 6 weight percent of polycaprolactone and vinylidene chloride-vinyl chloride copolymers are described as adhesives for textile applications in GB 1,421,233.

EP-A-1,698,459, filed on February 16, 2006 and published after the date of priority of the present application discloses multilayer films wherein from 0.5 to 20 % by weight of solid polycaprolactone, i.e. with a number average molecular weight of from 10,000 to 100,000, is used to improve the stability vinylidene chloride polymers.

However, there has been no suggestion that lactone polyesters might be used to modify the permeability of polyvinylidene chloride copolymer films.

Accordingly, the first object of the present invention is a film comprising at least one layer of a vinylidene chloride polymer blend comprising a vinylidene chloride copolymer and from 3 to 30% by weight of polycaprolactone, relative to the total weight of the blend, wherein said film has an oxygen transmission rate (measured according to ASTM D-3985) in the range of from 100 to 500 cm³/m²-day-bar at 23°C.

As used herein, the term "film" is used in a generic sense to include a plastic web, regardless of whether it is a film or a sheet. Films of use in the present invention have a thickness of 250 µm or less, generally of from about 12 to about 150 µm, of from about 20 to about 90 µm, of from 25 to about 60 µm.

The term "oriented" is used herein interchangeably with the term "heal-shrinkable", these terms designating a multi-layer structure which has been stretched at a temperature, indicated as the "orientation temperature", higher than the Tg of each of the resins making up the structure and lower than the melting point of at least one of said resins, and set by cooling while substantially retaining its stretched dimensions.

"Oriented" materials can be mono-axially or biaxially oriented, depending on whether the stretching is carried out in only one direction, typically the machine or longitudinal direction (MD), or in two perpendicular directions, i.e. the machine or longitudinal direction (MD) and the transverse direction (TD). An "oriented" material will tend to return to its original unstretched (unextended) dimensions when heated to a temperature close to the orientation temperature ("heat-shrinkable"). For the purposes of the present invention "heat-shrinkable" films are those films that shrink by at least 10% of their original dimensions, in at least one of the machine and transverse directions, when heated to a temperature of 85° C for 4 seconds.

As used herein, the phrases "inner layer", "internal layer", or "intermediate layer" refer to any film layer having both of its principal surfaces directly adhered to another layer of the film.

As used herein, the phrase "barrier layer", is used with reference to the ability of a film layer to substantially reduce the film permeability to gases such as oxygen and carbon dioxide.

As used herein, the phrase "outer layer" or "exterior layer" refers to any film layer having less than two of its principal surfaces directly adhered to another layer of the film. In multi-layer films there are two outer layers, each of which has a principal surface adhered to only one other layer of the multilayer film.

As used herein, the phrase "seal layer", "sealing layer", "heat-seal layer", and "sealant layer", refers to an outer film layer involved in the sealing of the film to itself, another film layer of the same or another film and/or another article which is not a film. In general the heat-seal layer is the layer either in direct contact with the food product enclosed in the package or directly facing the food product.

As used herein, the term "seal" refers to any seal of a first region of a film surface to a second region of a film surface, wherein the seal is formed by heating the regions to at least their respective seal initiation temperatures. The heating can be performed by any of a wide variety of manners, such as using a heated bar, hot air, infrared radiation, etc.

As used herein, the phrase "abuse layer" refers to an exterior layer of the film which is not the sealant layer and which is subject to abuse.

As used herein, the term "vinylidene chloride polymer" refers to homopolymers of vinylidene chloride as well as to copolymers, terpolymers etc. of vinylidene chloride and one or more monoethylenically unsaturated monomers, wherein vinylidene chloride is the major component, and blends thereof. Monoethylenically unsaturated monomers suitable for use in the present invention include alkyl acrylates, alkyl methacrylates, acrylic acid, methacrylic acid, vinyl chloride, acrylonitrile. Preferably the monoethylenically unsaturated monomers are selected from the group of alkyl acrylates and alkyl methacrylates having from 1 to 4 carbon atoms per alkyl group and vinyl chloride. More preferably the monoethylenically unsaturated monomers are selected from the group of methyl acrylates and vinyl chloride.

The vinylidene chloride-vinyl chloride copolymer used in the present invention preferably comprises from 15 to 30%, preferably 20 to 24%, more preferably about 22%, vinyl chloride and from 85 to 70%, preferably 80 to 76%, more preferably about 78%, vinylidene chloride. The vinylidene chloride-vinyl chloride may be produced by either emulsion or suspension polymerisation, though it is preferred that emulsion polymerised material be used.

The vinylidene chloride-methyl acrylate copolymer preferably comprises from 6.5 to 9.5%, preferably 7.5 to 8.5%, more preferably about 8% by weight of methyl acrylate and from 93.5 to 90.5%, preferably 91.5 - 92.5%, more preferably about 92% by weight of vinylidene chloride. The vinylidene chloride-methyl acrylate copolymer is preferably a suspension polymerised copolymer.

Mixtures of vinylidene chloride-vinyl chloride copolymer and vinylidene chloride-methyl acrylate copolymer typically comprise from 50 to 80%, more preferably 60 to 70%, by weight vinylidene chloride-vinyl chloride copolymer and from 50 to 20%, more preferably 40 to 30%, by weight vinylidene chloride-methyl acrylate copolymer. Most preferably, the mixture comprises about 65% vinylidene chloride-vinyl chloride copolymer and about 35% vinylidene chloride-methyl acrylate copolymer.

The vinylidene chloride polymer blend suitable for the films of the present invention comprises from 3 to 30% by weight of polycaprolactone based on the total weight of the vinylidene chloride polymer composition, preferably from 3 to 25%, 24%, 22%, 20%, more preferably from 4 to 18%, 16%, 15%, even more preferably from 5% to 14%, 13%, 12%.

Polycaprolactones are prepared by the polymerization reaction of a lactone, or combination of lactones, having six carbon atoms in the ring. Lactones having substituents other than hydrogen on the carbon atoms in the ring can be used as starting material, however the larger the number of substituents the lower the stability of the resulting polymer. For the scope of the invention unsubstituted ε-caprolactone, in which all the carbon atoms have hydrogen substituents, is the preferred monomer.

Other monomers can also be incorporated into the polycaprolactone polymer chain, provided they are present as a minor component with respect to the caprolactone monomer.

Polycaprolactones can be produced in a wide range of molecular weights. Polycaprolactones with an average molecular weight (number average) of less than about 10,000, generally of from about 300 to about 8,000 are either liquids or waxy solids at room temperature. Polycaprolactones with a higher average molecular weight, e.g. from about 10,000 to about 100,000 are solid crystalline thermoplastic polymers.

Mixtures of polycaprolactones with different composition and/or molecular weight can be employed, provided the total amount by weight of the combined polycaprolactones ranges from 3 to 30% by weight of the vinylidene chloride polymer blend.

Blends of liquid, waxy or solid polycaprolactones in any proportion can be used in the vinylidene chloride polymer blend. As an example, the vinylidene chloride polymer blend could comprise a mixture of a solid and a liquid polycaprolactone, or a mixture of a solid and a waxy polycaprolactone, or even a mixture of a liquid and a waxy polycaprolactone. Alternatively, mixtures of two or more different solid (or liquid, or waxy) polycaprolactones could be used.

Examples of suitable polycaprolactones are the ones produced and sold by Solvay Interox Ltd. under the trade name CAPA®.

The amount of the polycaprolactone in the vinylidene chloride polymer blend may be used to control the permeability of the film. Depending on the thickness of the vinylidene chloride polymer blend layer amounts of polycaprolactone in the blend from 3 to 30% by weight provide films with an oxygen transmission rate ranging from about 100 to about 500 cm ³/m²-day-bar at 23°C.

As an example about 8% by weight of polycaprolactone may provide a film having an oxygen transmission rate of about 130 cm ³/m²-day-bar at 23°C, with a vinylidene chloride layer thickness of about 3.3 µm.

Thus the amount of polycaprolactone added to the vinylidene chloride polymer blend may be used to obtain films with a desired level of oxygen and carbon dioxide permeability suitable for packaging a particular foodstuff. It will be appreciated that the amount of polycaprolactone required to obtain the required permeability may be dependent upon the precise nature of the vinylidene chloride copolymer used. The optimum levels of additive may however be determined through routine trial and experimentation.

The oxygen transmission rate for the films useful for the package of the present invention ranges from 100 to 500 cm³/m²-day-bar at 23°C, from 120 to 450 cm ³/m² - day-bar at 23°C, from 180 to 450 cm ³/m²-day-bar at 23°C.

A suitable carbon dioxide transmission rate is preferably at least about 300 cm ³/m² - day-bar at 23°C, more preferably at least about 700 cm ³/m²-day-bar at 23°C, most preferably at least about 1,500 cm ³/m²-day-bar at 23°C.

The vinylidene chloride polymer blend may further comprise conventional plasticisers and/or stabilisers in an amount of from 1 to 5%, preferably from 2 to 4% relative to the total weight of vinylidene chloride polymer. Typically about 2% of plasticizer and/or stabiliser is used. Conventional materials may be used. Examples of suitable materials include epoxidised soyabean oil, epoxidised linseed oil, dibutyl sebacate and glycerol monostearate. The use of epoxidised soyabean oil is preferred.

Any known method can be used in the preparation of the vinylidene chloride polymer blend. For instance it can be prepared by directly blending the vinylidene chloride base polymer with polycaprolactone and other plasticizers and/or stabilisers using a conventional blending equipment.

The film of the present invention may comprise other layers in addition to the vinylidene chloride polymer blend layer.

The film may comprise a first layer comprising the vinylidene chloride polymer composition and an additional layer, for instance an heat-sealable layer.

When the film of the invention comprises more than one layer it can be prepared by co-extrusion of at least part of the layers, extrusion-coating, coating of the vinylidene chloride polymer blend on at least one preformed layer, heat- or glue-lamination of preformed films one of which comprising the vinylidene chloride polymer blend.

In a preferred embodiment, when the film of the invention comprises more than one layer the layer of the vinylidene chloride polymer blend is co-extruded with at least one other layer.

The multilayer film can be a three-layer structure with the vinylidene chloride polymer blend forming the core layer. The outer layers, on opposing sides of the core layer, can have the same or different compositions. For instance, one layer can be a heat-sealable layer and the other an abuse resistant layer.

Additional layers may also be present. The film may further comprise an intermediate or core layer between the heat-sealable and barrier layers so as to provide a four-layer structure. In the four-layer structure, the heat-sealable layer generally has a thickness of from 5 to 30 µm, preferably about 10 µm, the core or intermediate layer has a thickness from 15 to 40 µm, preferably 20 to 30 µm, more preferably about 25 µm, the barrier layer has a thickness from 2 to 8 µm, preferably from 3 to 6 µm, and the abuse layer has a thickness from 5 to 30 µm, preferably about 16 µm.

In an alternative embodiment the film has a five-layer structure. This comprises a heat-sealable layer, a first intermediate or core layer between the heat-sealable and barrier layers, the barrier layer, a second intermediate or core layer between the barrier and abuse layers and the abuse-resistant layer. In this embodiment, the heat-sealable generally has a thickness from 5 to 15 µm, preferably about 10 µm, the first intermediate layer has a thickness from 15 to 35 µm, preferably about 28 µm, the barrier layer has a thickness from 2 to 8 µm, preferably about 3 to 6 µm, the second intermediate layer has a thickness from 5 to 20 µm, preferably about 11 µm, and the abuse layer has a thickness from 3 to 10 µm, preferably about 4 µm.

In a further alternative embodiment the film has a six-layer structure. This comprises a heat-sealable layer, first and second intermediate or core layers between the heat-sealable and barrier layers, the barrier layer, a third intermediate or core layer between the barrier and abuse layers, and the abuse layer. In this embodiment, the heat-sealable layer generally has a thickness from 5 to 15 µm, preferably about 10 µm, the first intermediate layer has a thickness from 5 to 20 µm, preferably about 12 µm, the second intermediate layer has a thickness from 5 to 30 µm, preferably about 15 µm, the barrier layer has a thickness from 2 to 8 µm, preferably about 3 to 6 µm, the third intermediate layer has a thickness from 5 to 20 µm, preferably about 11 µm, and the abuse layer has a thickness from 3 to 10 µm, preferably about 4 µm.

In a further alternative embodiment the film has a seven-layer structure. This comprises a heat-sealable layer, first and second intermediate or core layers and a bulk layer between the heat-sealable and barrier layers, the barrier layer, a third intermediate or core layer between the barrier and abuse layers, and the abuse layer. In this embodiment, the heat-sealable layer generally has a thickness from 5 to 15 µm, preferably about 10 µm, the first intermediate layer has a thickness from 2 to 10 µm, preferably about 3 µm, the second intermediate layer has a thickness from 2 to 10 µm, preferably about 3 µm, the bulk layer has a thickness from 5 to 30 µm, preferably about 14 µm, the barrier layer has a thickness from 2 to 8 µm, preferably about 3 to 6 µm, the third intermediate layer has a thickness from 5 to 15 µm, preferably about 6 µm, and the abuse layer has a thickness from 5 to 20 µm, preferably about 10 µm.

In general the film will have a total thickness of from 15 to 150 µm, of from about 20 to about 90 µm, of from 25 to about 60 µm.

The heat-sealable layer used in the film may be any conventional heat-sealable layer. Such a layer may for example be an ethylene/alpha-olefin copolymer, ethylene vinyl acetate copolymer, ionomer, ethylene acrylic acid copolymer (EAA), ethylene methacrylic acid copolymer (EMAA), propylene copolymer, or blends thereof.

In this specification the term "ethylene/alpha-olefin copolymer" includes copolymers of ethylene and one or more comonomers selected from C₃ to C₂₀ alpha-olefins, such as 1-butene, 1-pentene, 1-hexene, 1-octene, 4-methyl-1-pentene and the like. Ethylene/alpha-olefin copolymers generally have a density in the range of from about 0.86 to about 0.94 g/cm³. The term linear low density polyethylene (LLDPE) is generally understood to include that group of ethylene/alpha-olefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylene/alpha-olefin copolymers may be referred to as very low-density polyethylene (VLDPE) and ultra-low density polyethylene (ULDPE). Ethylene/alpha-olefin copolymers may be obtained by either heterogeneous or homogeneous polymerization processes. Heterogeneous processes afford products with relatively wide molecular weight distribution (M _{w}/Mₙ greater than 3.0) and composition distribution. Copolymers obtained via a heterogeneous process typically contain a relatively wide variety of main chain lengths and comonomer percentages. On the other hand, homogeneous processes afford products with relatively narrow molecular weight distribution (M _{w}/Mₙ less than 3.0) and composition distribution. Heterogeneous processes may employ, for instance, Ziegler-Natta catalysts. Homogeneous processes typically use metallocene or other single-site catalysts.

The term "ethylene-vinyl acetate copolymer" refers to a copolymer formed from ethylene and vinyl acetate monomers wherein the ethylene units are present in a major amount and the vinyl acetate units are present in a minor amount.

The term "ionomer" refers to, for example, a copolymer of ethylene with a copolymerisable ethylenically unsaturated acidic monomer, usually an ethylenically unsaturated carboxylic acid, which may be di- or mono basic but is generally monobasic, for example acrylic or methacrylic acid, in its ionised rather than its free acid form, the neutralising cation being any suitable metal ion for example an alkali metal ion, zinc ion or other multivalent metal ion.

The term "propylene copolymer" refers to a copolymer formed from propylene and ethylene and/or one or more C₄ to C₂₀ alpha-olefin monomers wherein the propylene units are present in a major amount and the ethylene and/or alpha-olefin units are present in a minor amount. Typical examples of propylene copolymers are ethylene-propylene copolymers and ethylene-propylene-butene terpolymers.

Preferred polymers for the heat-sealable layer are ethylene/alpha-olefin copolymers with a density in the range of from about 0.86 to about 0.92 g/cm ³, ethylene vinyl acetate copolymers, ionomers, propylene copolymers and blends thereof.

The abuse layer in the film may include any of the following: ethylene/alpha-olefin copolymers, ethylene vinyl acetate copolymers, propylene copolymers, polyamides and copolyamides, polystyrenes, polyesters and ionomers.

In a particular embodiment, the abuse-resistant layer is a polyamide layer. Suitable polyamides may be aliphatic polyamides e.g., polyamide 6, polyamide 11, polyamide 12, polyamide 66, polyamide 69, polyamide 610, polyamide 612, and copolyamides including copolyamide 6/9, copolyamide 6/10, copolyamide 6/12, copolyamide 6/66, copolyamide 6/69, and aromatic polyamides and copolyamides, such as 6I, 6I/6T, MXD6, MXD6/MXDI etc.

In an alternative embodiment, the abuse layer comprises an ethylene/alpha-olefin copolymer.

It will be understood that blends of resins may be used in place of individual resins in the various layers of the films of the invention, particularly in the heat-sealable and abuse layers.

An intermediate layer or layers can be present between the outer layers (i.e. heat-sealable and abuse layers) and the barrier layer. Such layers can be for example bulk layers, that is layers able to improve the abuse-resistance, toughness, modulus, etc., of the film. Bulk layers generally comprise polymers that are inexpensive relative to other polymers in the film which provide some specific purpose unrelated to abuse-resistance, modulus, etc.

Another type of intermediate layer is a seal-assist layer, which is adjacent to the heat-sealable layer and contributes to the formation of heat seals. Suitable polymers for the intermediate layers are for instance ethylene/alpha-olefin copolymers, ethylene vinyl acetate copolymers, and propylene copolymers. In a particular embodiment, an intermediate layer of ethylene vinyl acetate copolymer is used for example in the four- or five-layer structure described above. The ethylene vinyl acetate copolymer may be modified with, for example, maleic anhydride.

Still another type of intermediate layer is an adhesive or tie layer. Suitable adhesive layers comprise, for example, chemically modified ethylene polymers for example, copolymers of ethylene with esters of ethylenically unsaturated carboxylic acids, such as alkyl acrylates or methacrylates, graft copolymers of maleic acid or anhydride onto ethylene vinyl acetate copolymers, graft copolymers of fused ring carboxylic anhydrides onto polyethylene, resin mixtures of these and mixtures with polyethylene or copolymers of ethylene and alpha olefin.

Additives can be added to one or more layers to enhance their workability and/or other characteristics of the final film. Among these one can mention additives in common use such as antiblock, slip and antifog agents; fluoropolymer-based processing aids; oxygen scavengers etc.

The film may be produced using conventional techniques. Films may be produced by extrusion or co-extrusion and optionally monoaxial or, preferably, biaxial orientation.

Orientation may, for example, be effected by the trapped bubble technique, which is well known in the art. The extruded tubular film is cooled and collapsed. The tubular film is subsequently fed through a bath of hot water and, as it leaves the hot water it is inflated and blown into thin tubing. The tubular film is rapidly cooled and then rolled-up for further processing.

Alternatively, the film may also be prepared by flat extrusion (co-extrusion or extrusion coating) followed by orientation in one or both directions by tenter frame. Orientation can be carried out in such a case either sequentially or simultaneously.

Preferably the orientation is carried out at a temperature from 85 to 140°C, more preferably from 90 to 120°C. The orientation ratio may range, depending on the orientation technique, from 2 to 8 in each direction, typically from 2 to 5. Oriented films can be heat shrinkable or heat-set. Heat shrinkable films are preferred.

The multilayer films can optionally be cross-linked by means of irradiation. Generally, the irradiation is performed using high energy electrons to provide a dosage of from 10 to 100 kGy, preferably 30 to 80, for example about 60 kGy. Cross-linking may also be effected in known manner using chemical cross-linking agents. Irradiation can be performed on all the layers of the film at the same time or, alternatively, only on selected layers. In a preferred embodiment however one or more layers of a multilayer film (the substrate) are extruded or co-extruded and subsequently cross-linked by irradiation; and the barrier layer and any further layers are then extruded or co-extruded onto the substrate.

In a specific embodiment, using a tubular extruder a heat-sealable layer and, any intermediate layers present between the heat-sealable layer and the barrier layer are co-extruded and these layers are then irradiated by electron bombardment to provide cross-linking and increase the strength of the extruded layers. After irradiation, the barrier layer and remaining layers of the film, including the abuse-layer, are extruded onto the irradiated layers (or substrate). The film may then be monoaxially or, preferably, biaxially oriented.

Alternatively non-heat shrinkable non-oriented films may be produced according to the present invention, for instance using hot-blown or cast extrusion techniques.

The film of the present invention may be used either as a film or a bag or a pouch, or as a tubing to form a package in a conventional manner.

Accordingly, the second object of the present invention is a package comprising a respiring food product enclosed in a film comprising at least one layer of a vinylidene chloride polymer blend comprising a vinylidene chloride copolymer and from 3 to 30% by weight of polycaprolactone, relative to the total weight of the blend, wherein said film has an oxygen transmission rate (measured according to ASTM D-3985) in the range of from 100 to 500 cm³ /m²-day-bar at 23°C.

Typically the package comprises a film which comprises at least three layers: an outer heat-sealing layer, an intermediate layer comprising the vinylidene chloride polymer blend and an outer abuse layer. The heat-sealing layer is the layer in direct contact with or directly facing the packaged food product.

The package of the invention is obtained in a conventional manner. Vacuum packaging in heat sealable plastic bags is a conventional way of packaging food items. Vacuum packaging typically involves placing the food item in a heat sealable plastic bag and then evacuating air from the bag and thus collapsing it about the contained food item. The bag is then heat sealed in its evacuated condition so that the food item becomes encased in a generally air-free environment. Typically, the bag is a heat shrinkable bag, and after the heat sealing step, it is advanced to a hot water or hot air shrink tunnel to induce shrinkage of the bag around the food item.

For example, when the film is produced as a tubular film, bags can be formed by transverse sealing and cutting across the flattened tubular film to make individual bags. Alternatively, bags may be made by slitting the tubular film along one edge and then transversely sealing and severing the film to produce bags.

Thus, in a first embodiment the package of the present invention comprises a respiring food product enclosed under vacuum in a bag made from a multilayer film which comprises at least one layer of a vinylidene chloride polymer blend comprising a vinylidene chloride copolymer and from 3 to 30% by weight of polycaprolactone, relative to the total weight of the blend, said film having an oxygen transmission rate in the range of from 100 to 500 cm³/m²-day-bar at 23°C, said bag having been heat-shrunk around the product.

Other types of package are known and may be suitable for the storage of respiring food products. In a second embodiment the package of the present invention comprises a tray supporting the respiring food product, the tray and the food product being overwrapped by the heat-shrunk multilayer film. In an alternative embodiment, the film, either heat-shrinkable or not, could be sealed onto the flange of the tray supporting the respiring food product.

Alternatively, the film could enclose the respiring food product in the form of a hermetically sealed pouch. A modified atmosphere with respect to air could be present inside the pouch to improve the shelf-life of the product.

The present invention will now be described in more detail with particular reference to the following non-limiting examples:

EXAMPLES

Vinylidene chloride polymer blends were prepared from vinylidene chloride-methyl acrylate copolymer (6% methyl acrylate content), epoxidised soyabean oil (ESO), when present, and the resins listed in Table 1. The exact compositions of the blends are shown in the tables within each example.

[Table 0001]
[Table ]

**Table 1**

| | |
|---|---|
| PCL1 | CAPA^{®} 6501, number average molecular weight 50,000 |
| PCL2 | CAPA^{®} 6503, number average molecular weight 50,000 |
| PCL3 | CAPA^{®} PL 1000, number average molecular weight 1,000 |
| PCL4 | CAPA^{®} 2403D, number average molecular weight 4,000 |
| PBS | Mitsubishi AZ91T, poly(butylene succinate) |
| PBTA | BASF Ecoflex FBX 7011, copolyester based on terephthalic acid, adipic acid and 1,4-butanediol |

EXAMPLE 1

A multilayer film comprising a blend consisting of 92% vinylidene chloride-methyl acrylate copolymer and 8% PCL1 was prepared by co-extrusion of a heat-sealable layer (VLDPE, density of 0.911 g/cm³) and an intermediate layer (ethylene vinyl acetate, 9% vinyl acetate content) to provide a substrate. This substrate was then irradiated using high-energy electrons (64 kGy) to provide crosslinking. After irradiation, a layer of the vinylidene chloride copolymer composition, and an abuse-resistant layer (ethylene vinyl acetate, 9% vinyl acetate content) were extruded onto the substrate. The films were then oriented biaxially, with an orientation ratio of about 3 in the machine direction and about 3.5 in the transverse direction. Orientation was performed by cooling and collapsing the extruded tubular film, feeding the film through a hot water bath (approximately 95°C), inflating the film and blowing into thin tubing. The films were then rapidly cooled and rolled-up for further processing. The total thickness of the film was 53 µm. The barrier layer thickness was about 3.3 µm.

Oxygen transmission rates (OTR) of the multilayer films were measured at 23°C and 0% relative humidity according to ASTM 3985. Composition of the barrier layer and OTR values expressed in cm ³ /m²-day-bar are shown in Table 2.

COMPARATIVE EXAMPLE 1

A multi-layer film incorporating a blend consisting of 92% vinylidene chloride-methyl acrylate copolymer and 8% epoxidised soyabean oil was produced by a procedure analogous to that of Example 1. The total thickness of the film was 53 µm. The barrier layer thickness was about 3.6 µm
The permeabilities of the films thus produced, measured on the fresh film are shown in Table 1.
[Table 0002]
[Table ]

**Table 2**

| | ESO (wt.%) | PCL1 (wt.%) | OTR fresh |
|---|---|---|---|
| Ex. 1 | - | 8 | 130 |
| Comp.Ex.1 | 8 | - | 119 |

EXAMPLES 2-6

Seven-layer films having the layer sequence heat-sealing / intermediate / bulk / intermediate / barrier / intermediate / abuse were prepared by co-extrusion of a heat-sealable layer (VLDPE, density of 0.911 g/cm ³), a first intermediate layer (ethylene vinyl acetate, 18% vinyl acetate content), a bulk layer (ethylene/propylene/butene terpolymer) and a second intermediate layer (ethylene vinyl acetate, 18% vinyl acetate content) to provide a substrate. This substrate was then irradiated using high-energy electrons (64 kGy) to provide crosslinking. After irradiation, a layer of the vinylidene chloride copolymer composition comprising a vinylidene chloride-methyl acrylate copolymer, polycaprolactone and ESO in the amounts shown in Table 3, an intermediate layer (ethylene vinyl acetate, 18% vinyl acetate content) and an abuse-resistant layer (ethylene vinyl acetate, 11% vinyl acetate content) were extruded onto the substrate. The films were then oriented biaxially, with an orientation ratio of about 3 in the machine direction and about 3.5 in the transverse direction. Orientation was performed by cooling and collapsing the extruded tubular film, feeding the film through a hot water bath (approximately 95°C), inflating the film and blowing into thin tubing. The films were then rapidly cooled and rolled-up for further processing. The total thickness of the films was 53 µm.

Oxygen transmission rates (OTR) of the multilayer films were measured at 23°C and 0% relative humidity according to ASTM 3985.

Composition of the barrier layer and OTR values (expressed in cm ³ /m²-day-bar for a 3.2 µm layer thickness) of the fresh films and after 2 months ageing are shown in Table 3. As a reference Table 3 shows OTR values of a commercial material sold for the packaging of cheese which contains epoxidised soyabean oil in the vinylidene chloride polymer barrier layer.

[Table 0033]
[Table ]

**Table 3**

| | ESO (wt.%) | PCL2 (wt.%) | PCL4 (wt.%) | PCL3 (wt.%) | OTR_{fresh} | OTR_{aged} | Variation%* |
|---|---|---|---|---|---|---|---|
| Ex. 2 | 2 | 7 | | | 185 | 180 | 3 |
| Ex. 3 | 2 | 9 | | | 380 | 365 | 4 |
| Ex. 4 | 2 | 5 | | 7 | 420 | 413 | 2 |
| Ex. 5^{§} | 2 | | 7 | | 216 | 200 | 8 |
| Ex. 6 ^{§} | 2 | 3 | 7 | | 407 | 407 | 0 |
| Ref. | - | - | | - | 450 | 360 | 20 |

| | | | | | | | |
|---|---|---|---|---|---|---|---|
| * measured as (OTR_{fresh}-OTR_{aged})/OTR_{fresh} X 100 § measured after 6 weeks | | | | | | | |

Examples 2-6 show that the films of the invention have OTR values which are more constant with time with respect to the reference material in which the vinylidene chloride permeability has been modified using epoxidised soyabean oil.

A gassing cheese (Gouda type) was Vacuum packaged in bags produced using the film of Example 5 and of a commercially available reference material. The preservation of the cheese and its organoleptic properties were monitored over a four-months period. The quality of the cheese packaged in the film of Example 5 was rated as comparable to the quality of the products packaged in the reference bags in terms of taste, smell, absence of moulds, tightness of the bags (no formation of gas pockets wihin the package).

EXAMPLE 7 AND COMPARATIVE EXAMPLES 2-3

Four layer films were prepared following the same procedure of Example 1, using the same resins for the heat sealable, intermediate and abuse resistant layers. The total thickness of the films was 53 µm. The barrier layer of the film of Ex. 7 consisted of 91% wt. of vinylidene chloride-methyl acrylate copolymer, 7% wt. PCL4 and 2% epoxidised soyabean oil. In comparative examples 2 and 3 polycaprolactone was replaced with two different polyesters: poly(butylene succinate) (PBS) obtained by the reaction of succinic acid and 1,4-butanediol and a copolyester of terephthalic acid, adipic acid and 1,4-butanediol (PBTA).

Oxygen transmission rates (OTR) of the multilayer films were measured at 23°C and 0% relative humidity according to ASTM 3985. The OTR values (expressed in cm ³ /m 2-day-bar for a 3.2 µm layer thickness) of the fresh films and after 1 month ageing (Table 4) show that films with vinylidene chloride barrier blends comprising polycaprolactone have a lower dependance on ageing than films comprising blends of vinylidene chloride and polyesters like PBS and PBTA.

[Table 0004]
[Table ]

**Table 4**

| | ESO (wt.%) | PCL4 (wt.%) | PBS (wt.%) | PBTA (wt.%) | OTR_{fresh} | OTR_{aged} | Variation %* |
|---|---|---|---|---|---|---|---|
| Ex. 7 | 2 | 7 | | | 197 | 186 | 6 |
| Comp. Ex. 2 | 2 | - | 7 | | 61 | 45 | 26 |
| Comp. Ex. 3 | 2 | - | | 7 | 90 | 72 | 20 |

| | | | | | | | |
|---|---|---|---|---|---|---|---|
| * measured as (OTR_{fresh}-OTR_{aged})/OTR_{fresh} X 100 | | | | | | | |

## Claims

1. A film comprising at least one layer of a vinylidene chloride polymer blend comprising a vinylidene chloride polymer and from 3 to 30% by weight of polycaprolactone, wherein said film has an oxygen transmission rate (measured according to ASTM-D-3985) in the range of from 100 to 500 cm³ /m²-day-bar at 23°C.

2. The film according to claim 1 wherein said vinylidene chloride polymer blend layer has been coextruded with at least one other layer.

3. The film according to any preceding claim which is heat-shrinkable.

4. The film according to any preceding claim wherein the vinylidene chloride polymer blend comprises from 5 to 18% by weight of polycaprolactone.

5. The film according to any preceding claim wherein the polycaprolactone has a number average molecular weight in the range of 10,000 to 100,000.

6. The film according to any one of claims 1 to 4 wherein the polycaprolactone has a number average molecular weight of less than 10,000.

7. The film according to any preceding claim wherein the vinylidene chloride polymer blend comprises from 1 to 5% by weight of epoxidised soybean oil.

8. A package comprising a respiring food product enclosed in a film of any of the preceding claims.

9. The package according to claim 8 wherein the film has been heat-shrunk around said respiring food product.

10. The package according to claim 8 or 9 wherein the respiring food product is cheese.

## Patentansprüche

1. Folie, die mindestens eine Schicht aus einer Vinylidenchloridpolymermischung umfasst, die ein Vinylidenchloridpolymer und 3 bis 30 Gew.% Polycarprolacton umfasst, wobei die Folie eine Sauerstoffdurchlässigkeitsrate (gemessen nach ASTM-D-3985) im Bereich von 100 bis 500 cm³/m²-Tag-bar bei 23°C besitzt.

2. Folie nach Anspruch 1, bei der die Vinylidenchloridpolymermischungsschicht mit mindestens einer anderen Schicht koextrudiert worden ist.

3. Folie nach einem der vorangehenden Ansprüche, die wärmeschrumpfbar ist.

4. Folie nach einem der vorangehenden Ansprüche, bei der die Vinylidenchloridpolymermischung 5 bis 18 Gew.% des Polycaprolactons umfasst.

5. Folie nach einem der vorangehenden Ansprüche, bei der das Polycaprolacton ein Molekulargewicht-Zahlenmittel im Bereich von 10.000 bis 100.000 besitzt.

6. Folie nach einem der Ansprüche 1 bis 4, bei dem das Polycaprolacton ein durchschnittliches Molekulargewicht-Zahlenmittel von weniger als 10.000 besitzt.

7. Folie nach einem der vorangehenden Ansprüche, bei der die Vinylidenchloridpolymermischung 1 bis 5 Gew.% epoxidiertes Sojaöl enthält.

8. Packung, die ein respirierendes Nahrungsmittelprodukt eingeschlossen in eine Folie gemäß einem der vorangehenden Ansprüche umfasst.

9. Packung nach Anspruch 8, bei der die Folie um das respirierende Nahrungsmittelprodukt herum wärmegeschrumpft worden ist.

10. Packung nach Anspruch 8 oder 9, bei der das respirierende Nahrungsmittelprodukt Käse ist.

## Revendications

1. Film comprenant au moins une couche d'un mélange d'un polymère de chlorure de vinylidène comportant un polymère de chlorure de vinylidène et de 3 à 30 % en poids de polycaprolactone, le film ayant une vitesse de transmission d'oxygène, mesurée selon la norme ASTM-D-3985, allant de 100 à 500 cm³/m²•jour•bar à 23 °C.

2. Film selon la revendication 1, **caractérisé en ce que** la couche de mélange de polymère de chlorure de vinylidène a été co-extrudée en même temps qu'au moins une autre couche.

3. Film selon une des revendications précédentes, **caractérisé en ce qu'**il est thermo-rétractable.

4. Film selon une des revendications précédentes, **caractérisé en ce que** le mélange d'un polymère de chlorure de vinylidène comprend de 5 à 18 % en poids de polycaprolactone.

5. Film selon une des revendications précédentes, **caractérisé en ce que** le polycaprolactone a un poids moléculaire moyen allant de 10.000 à 100.000.

6. Film selon une des revendications 1 à 4, **caractérisé en ce que** le polycaprolactone a un poids moléculaire moyen inférieur à 10.000.

7. Film selon une des revendications précédentes, **caractérisé en ce que** le mélange d'un polymère de chlorure de vinylidène comprend de 1 à 5 % en poids d'huile de soja époxydée.

8. Emballage comprenant un produit alimentaire ayant besoin de respirer, enfermé dans un film selon une des revendications précédentes.

9. Emballage selon la revendication 8, **caractérisé en ce que** le film a été thermo-rétracté autour du produit alimentaire ayant besoin de respirer.

10. Emballage selon la revendication 8 ou 9, **caractérisé en ce que** le produit alimentaire ayant besoin de respirer est du fromage.
